# EUROPÄISCHE PATENTSCHRIFT

(11) **EP 1 376 286 B1**
(45) Veröffentlichungstag und Bekanntmachung des Hinweises auf die Patenterteilung: **15.02.2006**
(21) Anmeldenummer: 03012819.3
(22) Anmeldetag: 05.06.2003
(51) Int. Cl.: G05B 23/02

(54) **Vorrichtung und Verfahren zum Überwachen eines ablaufenden Prozesses**
System and method for monitoring a process
Système et procèdè de surveillance d'un processus

(30) Priorität: 27.06.2002 DE 10228799
(43) Veröffentlichungstag der Anmeldung: 02.01.2004
(73) Patentinhaber: Fraunhofer-Gesellschaft zur Förderung der angewandten Forschung e.V., 80686 München (DE)
(72) Erfinder: Endres, Hanns-Erik, Dr., 80689 München (DE)
(74) Vertreter: Schoppe, Fritz

(56) Entgegenhaltungen:
- DE-A- 10 114 206
- DE-A- 19 743 600

## Beschreibung

Die vorliegende Erfindung bezieht sich auf das Überwachen von Prozessen.

Die zunehmende Automatisierung von Prozessen oder Vorgängen der Industrie oder des täglichen Lebens erfordert eine Kontrolle und Steuerung. Dabei müssen aus Sensordaten solche Informationen ermittelt werden, die Aussagen über den Stand des Prozesses liefern und ob der Prozeß bereits beendet ist. Diese Aussagen werden anhand der von den Sensoren ermittelten Meßwerte aufgrund des Prozeßwissens entweder vom Bedienungspersonal oder über entsprechende Algorithmen ermittelt.

Im Stand der Technik werden zur Kontrolle und Steuerung von diskontinuierlich ablaufenden Prozessen in Flüssigkeiten, einem Reinigungsschritt in einer industriellen Anlage zur Lebensmittelverarbeitung bei der Abreinigung von Belägen usw., in der Regel eine Vielzahl von Sensoren eingesetzt, die zur Beurteilung des Prozeßfortschrittes dienen. Falls der Prozeßfortschritt nicht direkt gemessen werden kann, werden die Sensordaten in der Steuerung danach bewertet, ob der Prozeß beendet werden soll oder ein weiterer Prozeßschritt notwendig ist.

Für die Prozeßmeßtechnik werden verschiedene Sensoren zur Messung jeweiliger Parameter verwendet. Diese Sensoren können Leitfähigkeitssensoren sein, die eine Leitfähigkeit beispielsweise ohmsch, mittels Voltammetrie oder Potentiometrie messen. Ferner werden auch Sensoren zur Messung der optischen Eigenschaften, beispielswiese mittels Durchlicht-, Streulicht-, Oberflächenreflektionsmessung oder Spektroskopie verwendet. Weitere im Stand der Technik eingesetzte Sensoren umfassen Sensoren zur Erfassung der Viskosität, der Permitivität, beispielsweise durch Erfassung der Impedanz oder Impedanzspektroskopie, einer Temperatur, einer Wärmeleitfähigkeit, einer Wärmekapazität oder chemische Sensoren aller Art. Dabei ist es in der Regel unerheblich, ob die Sensoren auf eine herkömmliche Art und Weise oder mikrosystemtechnisch aufgebaut sind. Ferner ist ein Einbau der Sensoren nicht kritisch, sofern der Einbauort zur Messung relevanter Eigenschaften geeignet ist.

Neben der Qualität der Sensoren und der Erfassung der Parameter durch die Sensoren ist die Bewertung der erfaßten Parameter von entscheidender Bedeutung. Im Stand der Technik werden dazu wissensbasierte Algorithmen, wie beispielsweise eine Fuzzy-Logik, eingesetzt.

Diese Verfahren weisen jedoch eine Reihe von Nachteilen auf. Zum einen ist der Zusammenhang von Sensorparametern mit dem Zustand des Prozesses typischerweise schwer und aufwendig zu ermitteln. Störgrößen, die bei der Ermittlung der Abhängigkeit der Sensorparameter vom Zustand des Prozesses nicht auftraten, können nur schwer kompensiert werden. Generell weisen wissensbasierte Algorithmen den Nachteil auf, daß sie auf unerwartete Änderungen nicht reagieren können. Ferner müssen die zeitlichen Änderungen des Sensors, d.h. eine Sensordrift, aufwendig kompensiert werden oder es muß eine Nachkalibrierung des Sensors durchgeführt werden.

Die DE 101 14 206 A1 offenbart ein Verfahren zur Überwachung und Steuerung von Prozessen unter Verwendung selbstüberprüfender Sensoren. Das Überwachungssystem weist einen hierarchischen Aufbau auf, wobei die Sensoren auf einer unteren Ebene angeordnet sind und jeweilige Sensorsignale an eine Überwachungseinheit auf einer höheren Ebene übertragen werden. Ein mehrdimensionales statistisches Modell des Prozesses umfasst eine Hauptkomponentenanalyse und Kerndichteverfahren für statistische Untersuchungen.

Die DE 197 43 600 A1 zeigt ein Verfahren zur Überwachung eines zyklischen Produktionsprozesses, bei dem Signalverläufe an mehreren Stellen des Produktionsprozesses aufgenommen werden. Eine Codierung der Signalverläufe mittels einer Hauptkomponentenanalyse wird verwendet, um durch Bilden einer Kenngröße eine Datenreduzierung zu erreichen. Die abgeleiteten Prozesskenngrößen werden in ein neuronales Netzwerk eingegeben, um einen kausalen Zusammenhang zwischen den Prozesskenngrößen und Qualitätskenngrößen nachzubilden. Dies ermöglicht in einer Bewertungsphase anhand vorliegender Prozesskenngrößen eine Qualität eines Produkts zu beurteilen.

Die Aufgabe der vorliegenden Erfindung besteht darin, eine Vorrichtung und ein Verfahren zu schaffen, die ein stabiles Überwachen von ablaufenden Prozessen ermöglicht.

Diese Aufgabe wird durch ein Verfahren zum Überwachen eines Prozesses nach Anspruch 1 und eine Vorrichtung zum Überwachen eines Prozesses nach Anspruch 9 gelöst.

Die vorliegende Erfindung schafft ein Verfahren zum Überwachen eines Prozesses mit folgenden Schritten:
Wiederholtes Erfassen von zumindest zwei unterschiedlichen Informationen des Prozesses;
Durchführen einer Hauptkomponententransformation aufgrund der erfaßten Informationen ohne Verwendung von vor dem Überwachungsverfahren erfaßten Informationen, um einen Hauptkomponenten-Meßvektor in einem Hauptkomponentenraum zu berechnen;
Berechnen einer Prozeßindikatorgröße unter Verwendung des berechneten Hauptkomponenten-Meßvektor und einem oder mehreren vorhergehend berechneten Hauptkomponenten-Meßvektoren; und
Erkennen eines Prozeßendes unter Verwendung der Prozeßindikatorgröße.

Die vorliegende Erfindung schafft ferner eine Vorrichtung zum Überwachen eines Prozesses mit folgenden Merkmalen:
einer Erfassungseinrichtung zum wiederholten Erfassen von zumindest zwei unterschiedlichen Informationen des Prozesses;
einer Einrichtung zum Durchführen einer Hauptkomponententransformation aufgrund der erfaßten Informationen, wodurch ein Hauptkomponenten-Meßvektor in einem Hauptkomponententraum berechnet wird; und
einer Auswerteeinrichtung zum Berechnen einer Prozeßindikatorgröße unter Verwendung des berechneten Hauptkomponenten-Meßvektors und einem oder mehreren vorhergehend berechneten Hauptkomponenten-Meßvektoren, wobei die Auswerteeinrichtung ferner ausgebildet ist, um ein Ende des Prozesses unter Verwendung der Prozeßindikatorgröße zu erkennen.

Die vorliegende Erfindung basiert auf der Erkenntnis, daß ein Ende eines diskontinuierlichen Vorgangs dadurch ausgezeichnet ist, daß sich die Prozeßparameter nicht mehr ändern und lediglich durch statistische Schwankungen oder Quereffekte beeinflußt werden. Eine empfindliche Beobachtung dieses Sättigungsvorgangs wird erreicht, indem eine Hauptkomponentenanalyse durchgeführt wird, die in einem einstufigen oder mehrstufigen Verfahren aus den Sensordaten berechnet wird. Dadurch wird eine Trajektorie der Meßvektoren, die alle Sensorsignale enthalten, nach der Hauptkomponententransformation in einem Sättigungspunkt enden. Erfindungsgemäß werden in dem Hauptkomponentenraum jeweils aufeinanderfolgende Meßvektoren miteinander verglichen, um eine Indikatorgröße zu gewinnen. Durch das iterative Vergleichen von aufeinanderfolgenden Meßvektoren im Hauptkomponentenraum werden Probleme beseitigt, die sich durch eine zeitliche Verschiebung aufgrund von Quereinflüssen, beispielsweise Einflüsse von Sensordriften vor Beginn der Meßreihe, in dem Sättigungspunkt des Hauptkomponentenraumes ergeben, da nicht die Trajektorie als solche sondern lediglich eine relative Veränderung der Meßvektoren im Hauptkomponentenraum beobachtet und zur Auswertung herangezogen wird. Dies ermöglicht beispielsweise ein Eliminieren von langzeitlichen Driften oder ein durch eine Veränderung des Sensors vor dem Beginn der Meßreihe verursachte Nullpunkt-Verschiebung des Sensorsignals.

Bei dem Vergleich der Meßvektoren im Hauptkomponentenraum, die nachfolgend auch als Hauptkomponenten-Meßvektoren bezeichnet werden, können verschiedene Kriterien zur Anwendung kommen. Bei einem Ausführungsbeispiel wird der Abstand jeweils zweier zeitlich aufeinanderfolgenden Hauptkomponenten-Meßvektoren verwendet. Dabei stehen verschiedene Metriken, wie beispielsweise eine euklidische Metrik oder eine Mahalanobis Distanz zur Verfügung.

Ferner kann als ein weiteres Kriterium, das nachfolgend als Richtungskriterium bezeichnet wird, die Richtung eines Differenzvektors der jeweils zu vergleichenden Hauptkomponenten-Meßvektoren dienen.

Zur Berechnung der Hauptkomponenten-Meßvektoren ist es ferner möglich, eine Auswahl der Meßvektoren, die für die Hauptkomponentenanalyse verwendet werden, beispielsweise jeder zweite Meßvektor, zu verwenden. Ferner ist es möglich, eine Mittelwertbildung einer vorbestimmten Anzahl von Meßvektoren durchzuführen, so daß eine Hauptkomponententransformation lediglich unter Verwendung der Mittelwerte durchgeführt wird.

Zur Berechnung der Hauptkomponententransformation kann jeder bekannte Algorithmus verwendet werden, wobei der Nipals-Algorithmus bevorzugt ist, der eine besonders rasche Berechnung erlaubt.

Bei einem Ausführungsbeispiel können ein oder mehrere weitere Kriterien zur Erzeugung einer oder mehrerer weiterer Indikatorgrößen verwendet werden. Ein solches Kriterium kann beispielsweise die Zeitdauer sein, bis zu der ein Endzustand erreicht wird. Die weitere Indikatorgröße kann beispielsweise zur Festlegung einer Entscheidung dienen, ob ein weiterer Prozeßschritt notwendig ist und welcher Art dieser weitere Prozeßschritt ist.

Zur Entscheidung, ob und welche Art eines Eingreifens in den Prozeß durchgeführt werden soll, kann ein einzelnes der oben beschriebenen Kriterien oder eine Verknüpfung der Kriterien durchgeführt werden. Bei einem Ausführungsbeispiel wird ein Absolutwert und vorzugsweise ein mittlerer Absolutwert des Abstandskriteriums und des Richtungskriteriums verwendet, um eine Bestimmung durchzuführen, ob ein weiterer Prozeßschritt notwendig ist.

Die Meßdaten der Meßvektoren können Sensordaten eines oder mehrerer bekannter Sensoren, wie beispielsweise optische, kapazitive, amperometrische oder chemische Sensoren, umfassen. Ferner können die Sensordaten auch aus einem Multisensorsystem gewonnen werden.

Die Meßdaten der Meßvektoren können vor der Hauptkomponenten einer Normierung unterzogen werden. Typischerweise wird der Mittelwert auf 0 und die Varianz auf 1 normiert. Die Normierung kann für die bis zu dem Zeitpunkt der jeweiligen Hauptkomponententransformation erfaßten Daten durchgeführt werden oder auf eine festgelegte Weise, die für alle während des gesamten Prozesses erfaßten Daten beibehalten wird. Welche der Normierungen bei einem Prozeß zur Anwendung kommt muß je nach Fall entschieden werden.
Bei den Sensordaten kann es sich um transiente Sensorsignale, wie beispielsweise ein Spektrum oder eine Temperatur, handeln. Ferner können die Sensordaten auch Daten einer Zeitreihenmessung umfassen.

Ein Vorteil der vorliegenden Erfindung besteht darin, daß eine a priori Kenntnis des Prozesses nicht notwendig ist, um die Hauptkomponenten bzw. Merkmale zu extrahieren. Ferner ist aufgrund der sukzessiven Durchführung der Hauptkomponentenanalyse kein kalibriertes Hauptkomponentensystem notwendig. Ferner werden durch die regelmäßige Neuberechnung Probleme, die durch Sensordriften, unerwarteten Quereinflüssen usw. entstehen können, wenn diese zu weit von der ursprünglichen Kalibrierung abweichen, vermieden.

Ferner kann die Auswahl der Sensorik entweder anhand des Prozeßwissens oder anhand formaler Kriterien, wie beispielsweise ein Einfluß auf das Ergebnis, der aus der ersten Teilmatrix der Hauptkomponententransformation (Loadings) bestimmbar ist, bestimmt werden.

Ferner kann bei einem Ausführungsbeispiel eine mehrstufige Hauptkomponententransformation zur Kombination von Sensordaten unterschiedlicher Dimensionalität verwendet werden. Bei einem Ausführungsbeispiel werden dabei drei Hauptkomponenten aus einem Spektrum, einem Leitwert, einer Temperatur und einer optischen Absorption als Meßvektor für die Hauptkomponententransformation verwendet.

Bevorzugte Ausführungsbeispiele der vorliegenden Erfindung werden nachfolgend unter Bezugnahme auf die beiliegenden Zeichnungen näher erläutert. Es zeigen:
- Fig. 1: eine schematische Darstellung eines Auführungsbeispiels einer Steuervorrichtung gemäß der vorliegenden Erfindung;
- Fig. 2: ein Verfahrensdiagramm zum Darstellen eines Steuerungsablaufs gemäß einem Ausführungsbeispiel der vorliegenden Erfindung;
- Fig. 3: eine Darstellung einer Trajektorie, die in die Ebene der ersten beiden Hauptkomponenten des Hauptkomponententraums projiziert ist;
- Fig. 4: ein Schaubild, bei dem ein exemplarischer Verlauf einer berechneten Indikatorgröße gegen die Zeit dargestellt ist;
- Fig. 5: eine schematische Darstellung eines Interdigital-Kondenstor-Sensor zur Belagerkennung, der als ein Sensor zum Liefern von Daten zum Durchführen einer Überwachung eines Reinigungsprozesses verwendbar ist;.
- Fig. 6: eine Darstellung eines Einbaus eines Sensors zur Belagerkennung in einer Anlage.

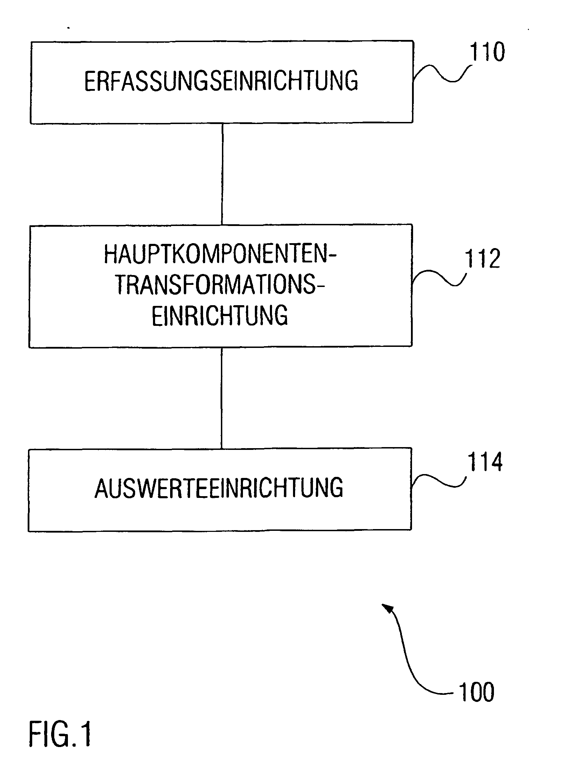

Fig. 1 zeigt als ein Ausführungsbeispiel der vorliegenden Erfindung eine Vorrichtung 100 zum Überwachen eines diskontinuierlich ablaufenden Prozesses. Die Vorrichtung 100 umfaßt eine Erfassungseinrichtung 110, die mit einer Hauptkomponententransformationseinrichtung 112 verbunden ist. Die Erfassungseinrichtung 110 ist ausgebildet, um der Hauptkomponententransformationseinrichtung 112 Informationen des Prozesses, die beispielsweise Meßdaten sein können, zu liefern. Die Meßinformationen können als eine oder mehrere Komponenten eines Meßvektors aufgefaßt werden, wobei die verschiedenen Komponenten unterschiedliche Dimensionalität aufweisen können. Beispielsweise kann bei einer Impedanzspektroskopie für einen Meßvektor 35 Impdenz-Meßwerte bei unterschiedlicher Frequenz erfaßt werden, wobei in einem Meßvektor auch eine logarithmische Darstellung der Meßwerte gewählt werden kann.

Die Erfassungseinrichtung 110 kann ein Sensor, wie beispielsweise ein Sensor zur Messung von Leitfähigkeiten, optischen Eigenschaften, einer Viskosität, einer Permitivität einer Temperatur, einer Wärmeleitfähigkeit, einer Wärmekapazität oder chemischen Eigenschaften sein. Ferner kann die Erfassungseinrichtung 110 auch lediglich eine Schnittstelle oder einen Eingang umfassen, um Meßsignale oder Meßdaten eines Sensors zu empfangen.

Die Hauptkomponententransformationseinrichtung 112 ist ferner mit einer Auswerteinrichtung 114 verbunden. Die Hauptkomponententransformationseinrichtung 112 kann beispielsweise einen Prozessor umfassen, bei dem geeignete Hauptkomponententransformationsverfahren durchgeführt werden können, so daß aus dem Meßvektor ein Hauptkomponenten-Meßvektor in einem Hauptkomponentenraum erzeugt wird.

Ebenso wie die Hauptkomponententransformationseinrichtung 112 kann auch die Auswerteeinrichtung 114 einen Prozessor umfassen, wobei dieselben einen gemeinsamen Prozessor teilen können.

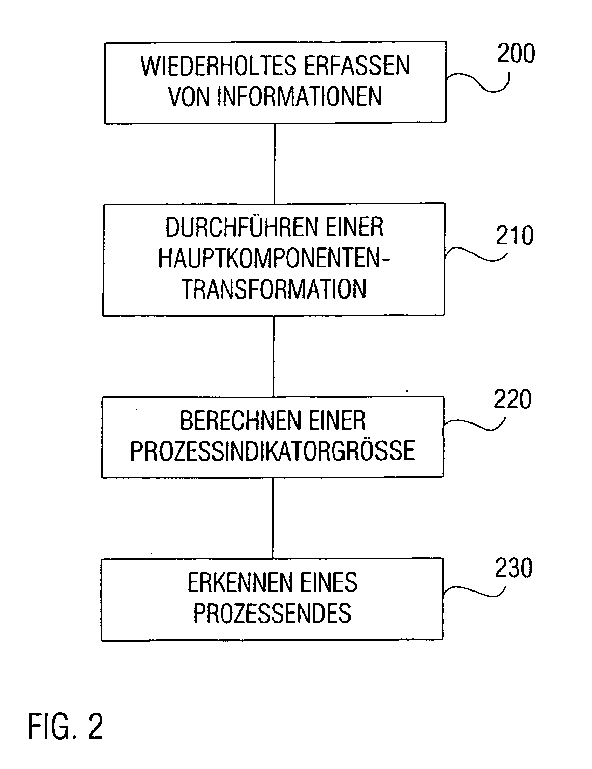

Unter Bezugnahme auf Fig. 2 wird im folgenden die Funktionsweise der Steuervorrichtung 100 beispielhaft näher erklärt.

In einem Schritt 200 wird ein Erfassen von Meßdaten durchgeführt, die vorzugsweise alle relevanten und physikalischen Parameter des zu überwachenden Prozesses erfassen. Hierbei ist darauf zu achten, daß eine ausreichende Anzahl relevanter Sensoren bzw. Sensordaten zur Verfügung steht, da die Stabilität des Verfahrens unter anderem von der Relevanz und Qualität der Daten abhängig ist. Die Erfassung der Meßvektoren wird in zeitlich aufeinanderfolgenden Abständen, die je nach Prozeßart gewählt werden können, wiederholt durchgeführt.

Stehen genügend Meßvektoren zur Verfügung, so wird in einem Schritt 210 eine Hauptkomponentenanalyse durchgeführt. Bei einer Hauptkomponententransformation handelt es sich um ein mathematisches Verfahren, bei dem unter Verwendung der eingegebenen Daten mittels einer multivarianten Statistik Hauptkomponenten bzw. Merkmale extrahiert werden und die eingegebenen Meßvektoren in einen Hauptkomponentenraum transformiert werden. Weitere Erklärungen bezüglich der Grundlagen der Hauptkomponententransformation finden sich beispielsweise in der EP 1 143 240 A1.

Die Hauptkomponentenanalyse stellt für ein Überwachungs- oder Steuerverfahren ein geeignetes Mittel zur Verfügung, um die Merkmale zu extrahieren, ohne daß eine a priori Kenntnis des Prozesses entweder beim Bedienungspersonal oder implizit in den eingesetzten Algorithmen notwendig ist. Vorzugsweise wird zur Berechnung der Hauptkomponententransformation ein Nipals-Algorithmus verwendet, der eine besonders rasche Berechnung erlaubt.

Zur Durchführung der Hauptkomponentenanalyse werden vorzugsweise alle bis zu dem Berechnungszeitpunkt zur Verfügung stehenden Meßvektoren verwendet werden. Es kann jedoch auch eine Auswahl der Meßvektoren getroffen werden, dahingehend, daß beispielsweise lediglich die letzten n Meßvektoren verwendet werden. Weiter kann auch eine Auswahl dahingehend getroffen werden, daß bestimmte Meßvektoren für die Hauptkomponentenanalyse herausgefiltert werden, beispielsweise indem lediglich jeder zweite Meßvektor verwendet wird. Dies ist insbesondere dann vorteilhaft, wenn eine Reduktion der Meßvektoren zur Beschleunigung der Hauptkomponententransformation durchgeführt werden soll. Ferner kann auch eine Reduktion der Meßvektoren mittels einer Bildung von Mittelwerten erreicht werden. Als ein Beispiel sei hier beispielsweise die Berechnung eines gleitenden Mittelwerts genannnt.

Vorzugsweise wird die Hauptkomponententransformation derart durchgeführt, daß eine Transformation auf die Eigenvektoren lediglich für die wichtigsten Hauptkomponenten erfolgt, wobei sich der Rang der Wichtigkeit nach der Varianz der Meßvektoren richtet. Beispielsweise kann die Transformation nur für die ersten beiden Hauptkomponenten oder ersten fünf Hauptkomponenten durchgeführt werden. Je nach vorliegendem Fall kann jedoch auch eine Auswahl der bei der Hauptkomponententransformation verwendeten Hauptkomponenten durchgeführt werden, beispielsweise indem die erste, dritte und fünfte Hauptkomponente verwendet wird.

Nachdem die Hauptkomponententransformation durchgeführt ist, sind die erfaßten Meßvektoren als jeweilige Hauptkomponenten-Meßvektoren in dem Hauptkomponententraum darstellbar.

Die Hauptkomponententransformationen können auch eine Kombination von Sensorsignalen unterschiedlicher Dimensionalität umfassen. Beispielsweise können die Meßvektoren jeweils aus einem Spektrum, einem Leitwert, einer Temperatur und einer optischen Absorption bestehen. In diesem Fall kann eine mehrstufige Hauptkomponententransformation zur Anwendung gelangen, bei der die Hauptkomponenten aus den Meßvektoren und mit Komponenten unterschiedlicher Dimensionalität berechnet werden.

Bei einem Ausführungsbeispiel kann auch eine Vorverarbeitung der Meßdaten zur Dimensionsreduktion vor der Hauptkomponententransformation erfolgen. Dabei kann eine Fouriertransformation und eine Wavelettransformation verwendet werden.

Das Durchführen der Hauptkomponententransformation erfolgt auf eine fortlaufende Weise, derart, daß nach einer bestimmten verstrichenen Zeit, oder anders ausgedrückt nach einer bestimmten Anzahl von neu erfassten Meßvektoren, eine neue Hauptkomponententransformation unter Verwendung der neu erfassten Meßvektoren durchgeführt wird. Die Zeitpunkte jeweils neuer Hauptkomponententransformationen können dabei vorbestimmt sein oder während des Ablaufs des Prozesses bestimmt oder abgeändert werden.

Folglich ergibt sich durch das fortlaufende Berechnen von Hauptkomponenten-Meßvektoren in dem Hauptkomponententraum eine Trajektorie, die den zeitlichen Verlauf des Prozesses darstellt. Bei einem diskontinuierlichen Prozeß erfolgt typischerweise zunächst eine starke Veränderung eines oder mehrerer Parameter des Prozesses. An dieser Stelle sei bemerkt, daß unter einem diskontinuierlichen Prozeß ein Prozeß verstanden wird, bei dem zumindest ein Parameter am Ende des Prozesses sich nicht mehr ändert oder lediglich statistisch schwankt. Ein diskontinuierlicher Prozeß kann auch mehrere Teilprozesse umfassen, die selbst wieder diskontinuierlich sind.

Bezogen auf die Trajektorie der Hauptkomponenten-Meßvektoren in dem Hauptkomponentenraum bedeutet dies, daß dieselbe in einem Sättigungspunkt bzw. Schwerpunkt endet oder lediglich statistisch um denselben schwankt. Dieser Sättigungspunkt kann jedoch bestimmten Einflüssen ausgesetzt sein, beispielsweise Einflüssen, die sich aus einer Temperaturänderung ergeben, wodurch eine Verschiebung desselben möglich ist.

Um dennoch auch bei auftretenden Quereinflüssen und Driften eine Steuerung vornehmen zu können, wird erfindungsgemäß ein Vergleich der Hauptkomponenten-Meßvektoren durchgeführt und eine Prozeßindikatorgröße berechnet. Vorzugsweise wird dabei der zuletzt berechnete Hauptkomponenten-Meßvektor mit dem unmittelbar davor berechneten Hauptkomponenten-Meßvektor verglichen und aus denselben eine Prozeßindikatorgröße berechnet. Alternativ können jedoch auch mehrere vorhergehend berechnete Hauptkomponenten-Meßvektoren zur Berechnung der Prozeßindikatorgröße verwendet werden.

Für den Vergleich stehen verschiedene Kriterien zur Verfügung. Bei dem Abstandskriterium wird der Abstand der verglichenen Hauptkomponenten-Meßvektoren, d.h. der Betrag des Differenzvektors der sich aus der Differenz derselben ergibt, bestimmt und als Prozeßindikatorgröße verwendet. Dies kann unter Verwendung verschiedener Metriken, wie beispielsweise der euklidischen Metrik oder der Mahalanobis Distanz erfolgen. Befindet sich der Prozeß am Ende, so streben die jeweils berechneten Abstände der Hauptkomonentenvektoren entweder dem Wert Null oder einem anderen Entwert zu. Dies kann, wie es nachfolgend noch genauer erklärt wird, verwendet werden, um eine Entscheidung zu treffen, ob und welcher Eingriff in dem Prozeß durchgeführt werden soll.

Ein weiteres Kriterium, das Richtungskriterium, bietet ebenfalls ein geeignetes Mittel zur Erkennung des Endes des Prozesses. Bei dem Richtungskriterium wird die Richtung des jeweiligen Differenzvektors der Hauptkomponenten-Meßvektoren als Prozeßindikatorgröße berechnet. Bei einem Ausführungsbeispiel kann auch eine Kombination der beiden Kriterien durchgeführt werden. Beispielsweise kann dies mittels Bildung eines mittleren Absolutwertes erfolgen. Es sei an dieser Stelle bemerkt, daß die obengenannten Kriterien lediglich eine Auswahl darstellt, die bei dem Vergleich der Hauptkomponenten-Meßvektoren zur Berechnung einer Prozeßindikatorgröße dienen können.

Die Hauptkomponentenanalyse kann an ausgewählten Kalibrierprozessen durchgeführt werden, so daß für die Auswertung die an dieser Kalibrierung berechnete Hauptkomponententransformation verwendet wird. Aufgrund der sukzessiven Durchführung der Hauptkomponentenanalyse ist jedoch ein solches kalibriertes Hauptkomponentensystem nicht notwendigerweise erforderlich.

Es können auch weitere Kriterien abgeleitet werden, beispielsweise aus der Zeitdauer, bis zu der ein Endzustand erreicht wird, ob ein weiterer Prozeßschritt und wenn ja, welcher notwendig ist. In diesem Fall kann die Prozeßindikatorgröße mehrere Komponenten umfassen, wobei eine erste Größe beispielsweise für die Entscheidung, ob ein weiterer Prozeßschritt durchgeführt werden soll, relevant ist, während eine zweite Komponente der Prozeßindikatorgröße für die Auswahl des durchzuführenden Prozeßschritts relevant ist.

Nachdem die Prozeßindikatorgröße in dem Schritt 220 berechnet ist, wird in einem Schritt 230 eine Erkennung eines Endes des Prozesses unter Verwendung der Prozeßindikatorgröße durchgeführt. Das Erkennen kann beispielsweise derart sein, daß festgestellt wird, ob eine vorbestimmte Anzahl von Prozeßindikatorgrößen in einem vorbestimmten Indikatorbereich liegt. Ferner kann auch hier ein Differenzverfahren eingesetzt werden, bei dem aufeinanderfolgende Prozeßindikatorgrößen miteinander verglichen werden, um eine relative Änderung der Prozeßindikatorgrößen festzustellen.

Daraufhin kann bei einem Ausführungsbeispiel zum Steuern des Prozesses ferner eine Entscheidung getroffen werden, ob ein Eingriff in den Prozess durchgeführt werden soll. Ein solcher Entscheidungsprozeß kann beispielsweise derart sein, daß ein Eingreifen durchgeführt wird, wenn eine vorbestimmte Anzahl von Prozeßindikatorgrößen in einem vorbestimmten Indikatorbereich liegt.

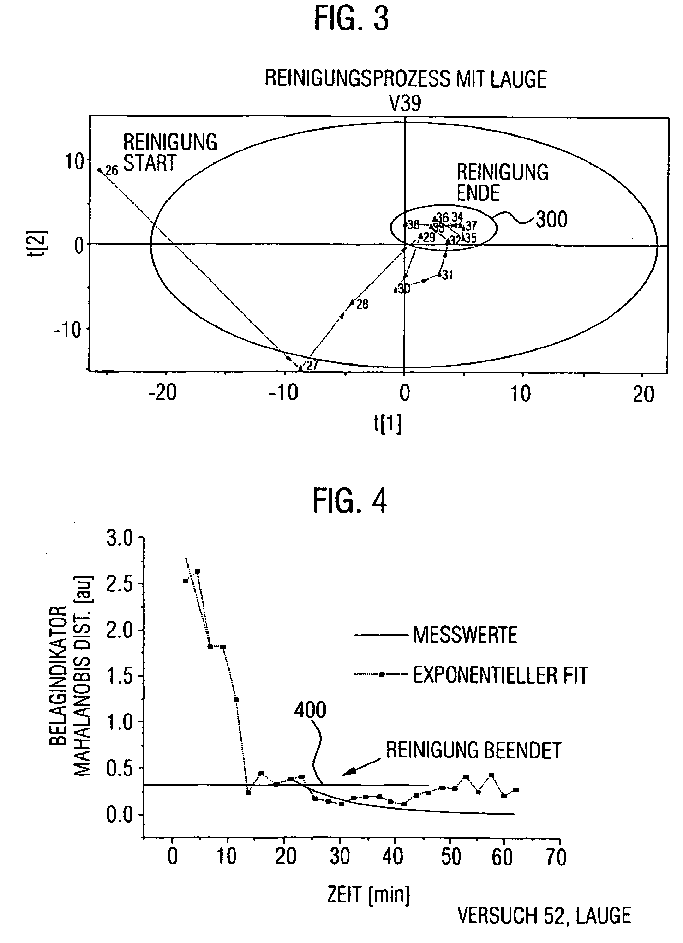

Zur Verdeutlichung des unter Bezugnahme auf Fig. 2 erklärten Verfahrens wird im folgenden anhand der Figuren 3 und 4 eine expemplarische Darstellung des Verlaufs einer Trajektorie im Hauptkomponententraum und einer Prozeßindikatorgröße erklärt.

Fig. 3 zeigt einen Verlauf von Indikatorgrößen in einem Diagramm, bei dem auf einer x-Achse eine erste Hauptkomponente aufgetragen ist, während auf einer y-Achse eine zweite Hauptkomponente aufgetragen ist. Der dargestellte Verlauf zeigt dabei eine Projektion einer Trajektorie eines Hauptkomponenten-Meßvektors in die Ebene dieser ersten beiden Hauptkomponenten.

Wie es zu erkennen ist, startet die Trajektorie an einem Punkt 26 und bewegt sich über einen Punkt 27, 28 usw. in einem mit einem Bezugszeichen 300 versehenen Bereich, der für die Punkte 32 und alle folgenden nicht mehr verlassen wird. Das Verbleiben in dem Bereich 300 zeigt somit das Ende der Reinigung an.

Unter Bezugnahme auf Fig. 4 wird im folgenden ein Diagramm erklärt, das den zeitlichen Verlauf des berechneten Prozeßindikators darstellt. In dem Schaubild ist auf einer x-Achse die Zeit in Minuten aufgetragen, während auf einer y-Achse die Prozeßindikatorgröße in Einheiten der Mahalanobis-Distanz (willkürlichen Einheiten) dargestellt ist.

Bei dem durch die Figuren 3 und 4 dargestellten Prozeß handelt es sich um einen Reinigungsprozeß mit Lauge, bei dem durch das erfindungsgemäße Verfahren die Änderung des Belags erkannt und die Reinigung entsprechend dazu gesteuert werden soll, wie es nachfolgend noch näher erklärt wird.

Folglich kann die in dem Schaubild von Fig. 4 aufgetragene Prozeßindikatorgröße als ein Belagindikator aufgefaßt werden. Die Prozeßindikatorgröße wurde bei diesem exemplarischen Beispiel durch eine Mahalanobis-Distanz zweier aufeinanderfolgenden Meßvektoren berechnet. In dem Diagramm ist mit einem Bezugszeichen 400 ein Schwellenwert bezeichnet, der zum Entscheiden bezüglich des Durchführens eines Prozeßeingriffs verwendet wird. Ein dauerhaftes Unterschreiten dieses Schwellenwerts zeigt an, daß die Reinigung beendet ist.

Folglich kann durch das Bestimmen einer dauerhaften Unterschreitung des Schwellenwerts, beispielsweise, indem eine vorbestimmte Anzahl von Punkten den Schwellenwert unterschreitet, das Prozeßende erkannt werden, wobei daraufhin geeignete Steuermaßnahmen zum Eingreifen in den Reinigungsprozeß durchgeführt werden können.

Als ein Ausführungsbeispiel wird im folgenden der Aufbau zum Steuern eines Reingigungsprozesses in einer Rohrleitung beschrieben, bei dem die in Fig. 3 und 4 dargestellten Daten gewonnen wurden.

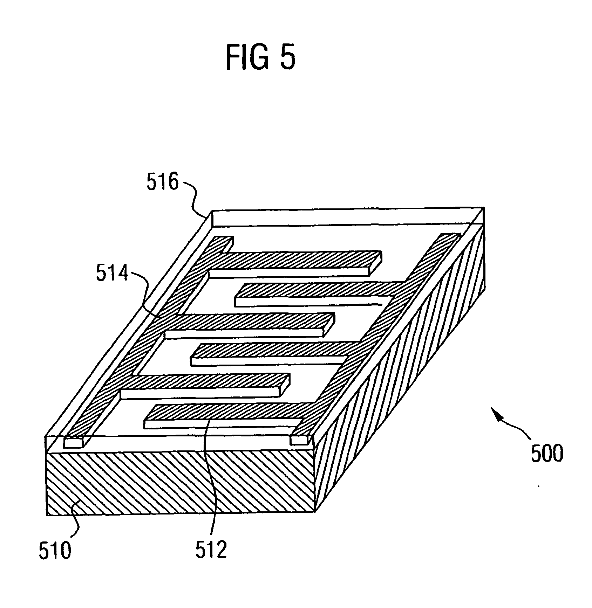

Fig. 5 zeigt einen Sensor, der bei diesem Ausführungsbeispiel einen Interdigitalkondensator umfaßt, dessen Impedanz von einem darauf abgeschiedenen Belag abhängig ist. Zur Anwendung kommt eine Impedanzspektroskopie, die es ermöglicht, ein Sensorsignal zu erfassen. Der Interdigitalkondensator 500 weist einen bekannten Aufbau auf, bei dem auf ein dielektrisches Substrat 510 eine erste Kammelektrodenanordnung 512 und eine zweite Kammelektrodenanordnung 514 aufweist. Ferner weist der Interdigitalkondensator eine Schutzschicht 516 aus SiC auf, die einen chemischen und mechanischen Schutz für den Sensor liefert. Die Schutzschicht 516 definiert auf ihrer Außenseite die aktive Fläche des Sensors.

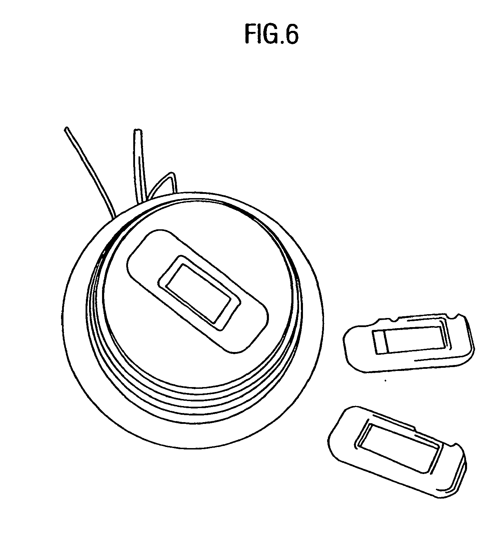

Fig. 6 zeigt ferner, wie der in Fig. 5 beschriebene Sensor in eine Adaptorplatte eingebaut werden kann, um den Belag in der Rohrleitung zu erkennen und eine dementsprechende Steuerung des Reinigungsprozesses durchzuführen.

## Patentansprüche

1. Verfahren zum Überwachen eines Prozesses mit folgenden Schritten:
Wiederholtes Erfassen (200) von zumindest zwei unterschiedlichen Informationen des Prozesses;
Durchführen (210) einer Hauptkomponententransformation aufgrund der erfaßten Informationen ohne Verwendung von vor dem Überwachungsverfahren erfaßten Informationen oder Kenntnisse des Prozesses, um einen Hauptkomponenten-Meßvektor in einem Hauptkomponentenraum zu berechnen;
Berechnen (220) einer Prozeßindikatorgröße unter Verwendung des berechneten Hauptkomponenten-Meßvektor und einem oder mehreren vorhergehend berechneten Hauptkomponenten-Meßvektoren lediglich durch das Bilden eines Betrags und/oder einer Richtung eines Differenzvektors, der aus dem berechneten Hauptkomponenten-Meßvektor und einem vorhergehenden Hauptkomponenten-Meßvektor gebildet wird; und
Erkennen (230) eines Prozeßendes anhand eines Werts der Prozeßindikatorgröße.

2. Verfahren nach Anspruch 1, bei dem der Prozeß ein diskontinuierlich ablaufender Prozeß ist.

3. Verfahren nach Anspruch 1 oder 2, bei dem der Schritt des wiederholten Erfassens (200) ein Erfassen von zumindest zwei unterschiedlichen Meßdaten des Prozesses aufweist.

4. Verfahren nach einem der Ansprüche 1 bis 3, bei dem der Schritt des Durchführens (210) einer Hauptkomponententransformation ferner den Schritt eines Auswählens der erfaßten Informationen umfaßt, um lediglich für die ausgewählten Informationen eine Hauptkomponententransformation durchzuführen.

5. Verfahren nach einem der Ansprüche 1 bis 4, bei dem der Schritt des Durchführens (210) einer Hauptkomponententransformation ferner ein Mitteln der erfaßten Informationen zum Erzeugen von Mittelwertinformationen, die bei der Hauptkomponententransformation verwendet werden, umfaßt.

6. Verfahren nach einem der Ansprüche 1 bis 5, bei dem in dem Schritt des Erkennens (230) eines Prozeßendes das Ende des Prozesses angezeigt wird, wenn eine vorbestimmte Anzahl von Prozeßindikatorgrößen in einem vorbestimmten Indikatorbereich liegt.

7. Verfahren nach einem der Ansprüche 1 bis 6, das ferner den Schritt eines Eingreifens in den ablaufenden Prozeß umfaßt, wenn bei dem Schritt des Erkennens eines Prozeßendes ein Ende des ablaufenden Prozesses erkannt wird.

8. Vorrichtung (100) zum Überwachen eines ablaufenden Prozesses mit folgenden Merkmalen:
einer Erfassungseinrichtung (110) zum wiederholten Erfassen von zumindest zwei unterschiedlichen Informationen des Prozesses;
einer Einrichtung (112) zum Durchführen einer Hauptkomponententransformation aufgrund der erfaßten Informationen, wodurch ein Hauptkomponenten-Meßvektor in einem Hauptkomponententraum berechnet wird, ohne Verwendung von vor dem Überwachungsverfahren erfaßten Informationen oder Kenntnisse des Prozesses; und
einer Auswerteeinrichtung (114) zum Berechnen einer Prozeßindikatorgröße lediglich unter Verwendung eines Abstands des berechneten Hauptkomponenten-Meßvektors von einem vorhergehenden Hauptkomponenten-Meßvektor und/oder einer Richtung eines Differenzvektors aus dem berechneten Vektor und einem vorhergehenden Vektor, wobei die Auswerteeinrichtung (114) ferner ausgebildet ist, um ein Ende des Prozesses anhand eines Werts der Prozeßindikatorgröße zu erkennen.

9. Vorrichtung (100) nach Anspruch 8, bei der die Erfassungseinrichtung (110) eine oder mehrere Sensoren umfaßt, die aus der Gruppe ausgewählt sind, die einen optischen Sensor, einen kapazitiven Sensor, einen amperometrischen Sensor, einen Temperatursensor und einen chemischen Sensor umfaßt.

10. Vorrichtung nach Anspruch 8 oder 9, bei der die Einrichtung (112) zum Durchführen einer Hauptkomponententransformation ferner ausgebildet ist, um aus den erfaßten Informationen des Prozesses eine Auswahl zu treffen, so daß eine Hauptkomponententransformation lediglich für die ausgewählten Informationen des Prozesses durchgeführt wird.

11. Vorrichtung (100) nach einem der Ansprüche 8 bis 10, bei der die Einrichtung (112) zum Durchführen einer Hauptkomponententransformation ferner ausgebildet ist, um eine Hauptkomponententransformation unter Verwendung von Mittelwertinformationen durchzuführen, die durch Mittelung der erfaßten Informationen des Prozesses gebildet werden.

12. Vorrichtung (100) nach einem der Ansprüche 8 bis 11, bei dem die Prozeßindikatorgröße aus den Absolutwerten des Abstands und der Richtung des Differenzvektors berechnet wird.

13. Vorrichtung (100) nach einem der Ansprüche 8 bis 12, bei der die Erfassungseinrichtung (110) ausgebildet ist, um transiente Meßsignale zu erfassen.

14. Vorrichtung (100) nach Anspruch 13, bei der die transienten Meßsignale ein Spektrum oder ein Temperatursignal umfassen.

15. Vorrichtung (100) nach einem der Ansprüche 8 bis 14, bei der die Erfassungseinrichtung ausgebildet ist, um Zeitreiheninformationen zu erfassen.

16. Vorrichtung (100) nach einem der Ansprüche 8 bis 15, bei der die Erfassungseinrichtung ausgebildet ist, um zumindest zwei unterschiedliche Parameter unterschiedlicher Dimensionalität zu erfassen und wobei die Einrichtung (112) zum Durchführen einer Hauptkomponententransformation ausgebildet ist, um eine mehrstufige Hauptkomponententransformation aufgrund der zumindest zwei unterschiedlichen Parameter unterschiedlicher Dimensionalität durchzuführen.

17. Vorrichtung (100) nach einem der Ansprüche 8 bis 16, die ferner eine Steuereinrichtung aufweist, um in den ablaufenden Prozeß einzugreifen, wenn durch die Auswerteeinrichtung ein Ende des Prozesses erkannt wird.

## Claims

1. Method for monitoring a process, comprising:
repeatedly acquiring (200) at least two different pieces of information of the process;
performing (210) a main component transformation due to the acquired information without using information acquired prior to the monitoring method, for calculating a main component measurement vector in a main component space;
calculating (220) a process indicator quantity by using the calculated main component measurement vector and one or several previously calculated main component measurement vectors merely by forming an amount and/or a direction of a difference vector, which is formed from the calculated main component measurement vector and a previous main component measurement vector; and
detecting (230) an end of the process by using the process indicator quantity.

2. Method according to claim 1, where the process is a discontinually running process.

3. Method according to claims 1 or 2, where the step of repeatedly acquiring (200) comprises acquiring of at least two different measurement data of the process.

4. Method according to one of claims 1 to 3, where the step of performing (210) a main component transformation further comprises the step of selecting the acquired information to perform a main component transformation merely for the selected information.

5. Method according to one of claims 1 to 4, where the step of performing (210) a main component transformation further comprises averaging the acquired information for generating average value information, which is used in the main component transformation.

6. Method according to one of claims 1 to 5, where in the step of detecting (230) an end of the process, the end of the process is indicated when a predetermined number of process indicator quantities are in a predetermined indicator area.

7. Method according to one of claims 1 to 6, further comprising the step of intervening into the running process when an end of the running process is detected in the step of detecting an end of the process.

8. Apparatus (100) for monitoring a running process, comprising:
acquisition means (110) for repeatedly acquiring at least two different pieces of information of the process;
means (112) for performing a main component transformation due to the acquired information, whereby a main component measurement vector is calculated in a main component space without using information acquired prior to the monitoring method or knowledge about the process; and
evaluation means (114) for calculating a process indicator quantity by merely using a spacing of the calculated main component measurement vector from a previous main component measurement vector and/or a direction of a difference vector from the calculated vector and a previous vector, wherein the evaluation means (114) is further formed to detect an end of the process on the basis of the process indicator quantity.

9. Apparatus (100) according to claim 8, where the acquisition means (110) comprises one or several sensors, which are selected from the group comprising an optical sensor, a capacitive sensor, an amperometrical sensor, a temperature sensor and a chemical sensor.

10. Apparatus according to claim 8 or 9, where the means (112) for performing a main component transformation is further formed to make a selection from the acquired information of the process, so that a main component transformation is performed merely for the selected information of the process.

11. Apparatus (100) according to one of claims 8 to 10, where the means (112) for performing a main component transformation is further formed to perform a main component transformation by using average value information, which is formed by averaging the acquired information of the process.

12. Apparatus (100) according to one of claims 8 to 11, where the process indicator quantity is calculated from the absolute values of the spacing and the direction of the difference vector.

13. Apparatus (110) according to one of claims 8 to 12, where the acquisition means (110) is formed to acquire transient measurement signals.

14. Apparatus (100) according to claim 13, where the transient measurement signals comprise a spectrum or a temperature signal.

15. Apparatus (100) according to one of claims 8 to 14, where the acquisition means is formed to acquire time series information.

16. Apparatus (100) according to one of claims 8 to 15, where the acquisition means is formed to acquire at least two different parameters of different dimensional characteristics, and wherein the means (112) for performing a main component transformation is performed to perform a multi-stage main component transformation due to the at least two different parameters of different dimensional characteristics.

17. Apparatus (100) according to one of claims 8 to 16, which further comprises a control means to intervene in the running process when an end of the process is detected by the evaluation means.

## Revendications

1. Procédé de surveillance d'un processus, aux étapes suivantes consistant à :
détecter de manière répétée (200) au moins deux informations différentes du procédé ;
effectuer (210) une transformation de composantes principales sur base des informations détectées sans utilisation d'informations détectées avant le procédé de surveillance ou de connaissance du processus, pour calculer un vecteur de mesure de composantes principales dans un espace de composantes principales ;
calculer (220) une grandeur d'indicateur de processus à l'aide du vecteur de mesure de composantes principales calculé et d'un ou plusieurs vecteurs de mesure de composantes principales calculés au préalable uniquement en formant une valeur et/ou une direction d'un vecteur de différence qui est formé à partir du vecteur de mesure de composantes principales calculé et d'un vecteur de mesure de composantes principales précédent ; et
identifier (230) une fin de processus à l'aide d'une valeur de la grandeur d'indicateur de processus.

2. Procédé selon la revendication 1, dans lequel le processus est un processus se déroulant de manière discontinue.

3. Procédé selon la revendication 1 ou 2, dans lequel l'étape de détection répétée (200) présente une détection d'au moins deux données de mesure différentes du processus.

4. Procédé selon l'une des revendications 1 à 3, dans lequel l'étape de réalisation (210) d'une transformation de composantes principales comprend, par ailleurs, l'étape de sélection des informations détectées, pour effectuer une transformation de composantes principales uniquement pour les informations sélectionnées.

5. Procédé selon l'une des revendications 1 à 4, dans lequel l'étape de réalisation (210) d'une transformation de composantes principales comprend, par ailleurs, un établissement d'une moyenne des informations détectées, pour générer des informations de valeur moyenne qui sont utilisées dans la transformation de composantes principales.

6. Procédé selon l'une des revendications 1 à 5, dans lequel est indiquée, à l'étape d'identification (230) d'une fin de processus, la fin du processus lorsqu'un nombre prédéterminé de grandeurs d'indication de processus se situent dans une zone d'indicateur prédéterminée.

7. Procédé selon l'une des revendications 1 à 6, comportant, par ailleurs, l'étape d'une intervention dans le processus en cours de déroulement lorsqu'il est identifié, à l'étape d'identification d'une fin de processus, une fin du processus en cours de déroulement.

8. Dispositif (100) de surveillance d'un processus en cours de déroulement, aux caractéristiques suivantes :
un dispositif de détection (110) destiné à détecter de manière répétée au moins deux informations différentes du procédé ;
un dispositif (112) destiné à effectuer une transformation de composantes principales sur base des informations détectées, par lequel est calculé un vecteur de mesure de composantes principales dans un espace de composantes principales, sans utilisation d'informations détectées avant le procédé de surveillance ou connaissance du processus ; et
un dispositif d'évaluation (114) destiné à calculer une grandeur d'indicateur de processus uniquement à l'aide d'une distance entre le vecteur de mesure de composantes principales calculé et un vecteur de mesure de composantes principales précédent et/ou d'une direction d'un vecteur de différence à partir du vecteur calculé et d'un vecteur précédent, le dispositif d'évaluation (114) étant réalisé, par ailleurs, de manière à identifier une fin du processus à l'aide d'une valeur de la grandeur d'indicateur de processus.

9. Dispositif (100) selon la revendication 8, dans lequel le dispositif de détection (110) comporte un ou plusieurs capteurs sélectionnés parmi le groupe comprenant un capteur optique, un capteur capacitif, un capteur ampérométrique, un capteur de température et un capteur chimique.

10. Dispositif selon la revendication 8 ou 9, dans lequel le dispositif (112) destiné à effectuer une transformation de composantes principales est, par ailleurs, réalisé de manière à effectuer une sélection à partir des informations du processus captées, de sorte qu'une transformation de composantes principales ne soit effectuée que pour les informations du processus sélectionnées.

11. Dispositif (100) selon l'une des revendications 8 à 10, dans lequel le dispositif (112) destiné à effectuer une transformation de composantes principales est, par ailleurs, réalisé de manière à effectuer une transformation de composantes principales à l'aide d'informations de valeur moyenne qui sont formées en établissant la moyenne des informations du procédé captées.

12. Dispositif (100) selon l'une des revendications 8 à 11, dans lequel la grandeur d'indication de processus est calculée à partir des valeurs absolues de la distance et de la direction du vecteur de différence.

13. Dispositif (100) selon l'une des revendications 8 à 12, dans lequel le dispositif de détection (110) est réalisé de manière à détecter des signaux de mesure transitoires.

14. Dispositif (100) selon la revendication 13, dans lequel les signaux de mesure transitoires comprennent un spectre ou un signal de température.

15. Dispositif (100) selon l'une des revendications 8 à 14, dans lequel le dispositif de détection est réalisé de manière à détecter des informations de séries de temps.

16. Dispositif (100) selon l'une des revendications 8 à 15, dans lequel le dispositif de détection est réalisé de manière à capter au moins deux paramètres différents de dimensionnalité différente et dans lequel le dispositif (112) destiné à effectuer une transformation de composantes principales est réalisé de manière à effectuer une transformation de composantes principales en plusieurs étapes sur base des au moins deux paramètres différents de dimensionnalité différente.

17. Dispositif (100) selon l'une des revendications 8 à 16, présentant, par ailleurs, un dispositif de commande pour intervenir dans le processus en cours de déroulement lorsqu'une fin du processus est identifiée par le dispositif d'évaluation.
